# EUROPÄISCHE PATENTSCHRIFT

(11) **EP 3 228 889 B1**
(45) Veröffentlichungstag und Bekanntmachung des Hinweises auf die Patenterteilung: **30.11.2022**
(21) Anmeldenummer: 17173907.1
(22) Anmeldetag: 06.05.2010
(51) Int. Cl.: F16C 33/64

(54) **LAUFBAHNELEMENT FÜR EIN GROSSWÄLZLAGER UND LAGERANORDNUNG**
TRACK ELEMENT FOR A LARGE-DIAMETER ROLLING BEARING AND BEARING ASSEMBLY
ÉLÉMENT DE CHEMIN DE ROULEMENT POUR UN ROULEMENT DE GRANDE DIMENSION ET ENSEMBLE DE PALIER

(30) Priorität: 06.05.2009 EP 09006156
(43) Veröffentlichungstag der Anmeldung: 11.10.2017
(62) Teilanmeldung aus: 10722591.4
(73) Patentinhaber: Aktiebolaget SKF, 415 50 Göteborg (SE)
(72) Erfinder: Liang, Baozhu, 97456 Hambach (DE); Wagner, Gerhard, 97357 Prichsenstadt (DE); May, Ulrike, 97526 Sennfeld (DE); Rumpel, Claus, 97440 Werneck (DE)
(74) Vertreter: Kuhstrebe, Jochen

(56) Entgegenhaltungen:
- WO-A1-03/060170
- DE-C1- 10 228 333
- JP-A- 2003 193 139
- JP-A- 2007 297 676
- US-A1- 2009 052 823
- WIRTSCHAFTSVEREINIGUNG STAHL: "Wärmebehandlung von Stahl - Härten, Anlassen, Vergüten, Baintisieren", MERKBLATT 450, 2005, pages 1-37,
- ASTM: "Standard Specification for High Hardenable Antifriction Bearing Steel A485-03", ASTM INTERNATIONAL, 2018, pages 1-3,
- OSKAR ZWIRLEIN, WALTER P. WIELAND: "case Depth for Induction hardened Slewing Bearing Rings", SAE TECHNICAL PAPER SERIES, 12 September 1983 (1983-09-12), - 15 September 1983 (1983-09-15), pages 1-15, International Off-Highway Meeting & Exhibition Milwaukee, Wisconsin
- C.W.WEGST: "Stahlschlüssel", 1998, Verlag Stahlschlüssel Wegst GmbH, Marbach ISBN: 3-922599-14-1 pages 35-36,
- STAHL-INFORMATIONS-ZENTRUM: "Wärmebehandlung von Stahl - Randschichthärten", MERKBLATT 236, 2009, pages 1-39,

## Beschreibung

Die vorliegende Erfindung betrifft ein Laufbahnelement für ein Großwälzlager und eine Großwälzlageranordnung.

Bei heute bekannten Großwälzlagern werden die Laufbahnelemente im Allgemeinen aus einsatz- oder durchgehärtetem Stahl gefertigt. Bei der Verwendung von Einsatzstahl wird der an sich niedrig legierte Stahl in einer Kohlenstoffatmosphäre in einer Randschicht aufgekohlt, sodass diese nachträglich gehärtet werden kann. Für Großwälzlager ist es aufgrund der ständigen Belastung durch die umlaufenden Wälzkörper auf den Laufbahnelementen erforderlich, eine hohe Oberflächenhärte im Bereich der Laufbahnen zu erzielen, um eine lange Lebensdauer gewährleisten zu können. Das Einsatz- oder Durchhärten der Laufbahnelemente ist jedoch mit einem relativ hohen Energieverbrauch verbunden.

Bei Schwenklagern ist es hingegen bekannt, gehärtete Randschichten mittels induktiver Verfahren zu erzeugen. Bei derartigen Lagern sind jedoch die Anforderungen an die Oberflächenhärte aufgrund der andersartigen Belastung durch die Wälzkörper nicht so hoch wie bei Großwälzlagern. Klassischerweise werden bei Schwenklagern andere Stahlsorten angesetzt als bei Großwälzlagern. Insofern lassen sich die bei diesen Lagerarten bekannten induktiven Härteverfahren nicht auf die Herstellung von Großwälzlagern übertragen.

Ebenfalls ist es bei kleineren Wälzlagerdurchmessern bekannt, induktives Randschichthärten bei den dort verwendeten Stahlsorten, wie zum Beispiel 100Cr6 anzuwenden. Auch hier lassen sich die bekannten Verfahren zum induktiven Härten der Randschichten unter wirtschaftlichen Gesichtspunkten nicht auf Großwälzlager übertragen.m,

Ferner sind aus der US 2009/052823 A1 und der JP 2003193139A Fahrzeugradlager mit gehärteten Laufbahnen bekannt.

Aus der WO03/060170 ist weiterhin ein induktives Härteverfahren bekannt, bei dem die durch das induktive Härten mittels induktiver Erwärmung und nachfolgendem Abschrecken erzeugte Härte in einem optionalen sich an das Härten anschließenden Anlassen aktiv wieder reduziert wird. Dabei wird allerdings der verwendete Stahl bis an seine werk stofflichen Grenzen gehärtet, was zu einer dünnen Randschicht, einem instabilen Gefüge in der Randschicht und einer stark abfallenden Randschichthärte führt, was die Lebensdauer des Lagerrings reduziert.

Es ist Aufgabe der vorliegenden Erfindung ein Wälzlagerelement für ein Großwälzlager und eine entsprechende Großwälzlageranordnung bereitzustellen, bei denen eine hohe Lebensdauer bei gleichzeitig einfacher Herstellung gewährleistet ist.

Diese Aufgabe wird durch ein Laufbahnelement mit den Merkmalen des Hauptanspruchs, sowie eine Großwälzlageranordnung mit den Merkmalen des nebengeordneten Patentanspruchs sowie durch ein Verfahren gemäß Anspruch 7 gelöst. Vorteilhafte Ausgestaltungen sind Gegenstand der abhängigen Unteransprüche.

Gemäß einem Ausführungsbeispiel der Erfindung wird ein Laufbahnelement für ein Großwälzlager, aufweisend folgende Merkmale angegeben:
- wenigstens eine Laufbahn in Kontakt zu einem Wälzkörper,
- die Laufbahn weist ein Grundgefüge und eine induktiv gehärtete

Oberflächenschicht auf, wobei die induktiv gehärtete Oberflächenschicht mittels eines induktiven Härteverfahrens, das ein Erwärmen mit einem Induktor und ein nachfolgendes Abschrecken mit einer Brause umfasst, gehärtet ist,
- das Laufbahnelement besteht aus einem Stahl, der eine Beimischung von Kohlenstoff von mindestens 0,46 Masse% aufweist.

Weiterhin weist ist das Laufbahnelement derart gehärtet, dass
- eine Tiefe der induktiv gehärteten Oberflächenschicht auf einen von einem Hertzschen Kontakt mit dem Wälzkörper erzeugten Spannungsverlauf abgestimmt ist, und diesen überdeckt; und
- dass die Oberflächenschicht nach dem Abschrecken eine durch das induktive Härten erzeugte maximale Härte aufweist, die geringer als die maximal erreichbare Härte des verwendeten Stahls ist, wobei die Oberflächenschicht der Laufbahn entlang des ganzen Laufbahnelements im Rahmen fertigungstechnischer Toleranzen die gleiche Härte aufweist.

Im Gegensatz zur kostspieligen Verwendung von Einsatzstahl, der außerhalb der Oberflächenschicht grundsätzlich einen Anteil von weniger als 0,2 Masse% Kohlenstoff aufweist und nur durch aufwändige Aufkohlung in der Randschicht auf einen Gehalt von beispielsweise 0,8 Masse% Kohlenstoff in dieser Schicht für den Einsatz in hoch belasteten Wälzlagern ausreichend härtbar wird, lässt sich hier ein kostengünstigerer, so genannter Vergütungsstahl mit einer Beimischung von Kohlenstoff von mindestens 0,46 Masse% verwenden, wobei die Kontaktzone des Laufbahnelements durch ein induktives Verfahren nachträglich gehärtet ist. Dieses Härtungsverfahren ist im Vergleich zur Aufkohlung der Randschicht mit einem deutlich reduzierten Aufwand verbunden. Neben den Laufbahnelementen können auch die Wälzkörper des Großlagers gemäß der Erfindung ausgebildet sein. Insbesondere die durch Wälzkontakt belasteten Elemente des Großlagers profitieren durch die erfindungsgemäße Ausgestaltung. Das Wälzlagergegenelement ist insofern der mit dem Laufbahnelement in Wälzkontakt stehende Wälzkörper und ist bevorzugt ebenfalls gemäß der Erfindung ausgebildet. Das Großwälzlager weist bevorzugt einen Durchmesser von mindestens 250 mm auf.

Die Erfindung basiert dabei wesentlich auf der Erkenntnis, dass bei geringeren Kohlenstoffanteilen als 0,46 Masse% die induktive Härtung der Oberflächenschichten keine ausreichende Oberflächenhärte mit einer ausreichend stabilen Gefügestruktur zur Gewährleistung einer ausreichend langen Lebensdauer des Laufbahnelements erreicht. Insbesondere kann bei geringerem Kohlenstoffgehalt in der Randschicht beim induktiven Härten bis an die Werkstoffgrenzen und einem nachfolgenden Anlassen ein nachteilig instabiles Gefüge entstehen, das zu einem frühzeitigen Ausfall des Wälzlagerelements und somit des Großwälzlagers führt. Hinzu kommt, dass insbesondere bei Großwälzlagern bei der Wärmebehandlung ein nicht mehr vernachlässigbarer Verzug des Materials auftritt, so dass eine hohe Laufgenauigkeit auf den Laufbahnen für die Wälzkörper nicht mehr gewährleistet ist. Der Verzug ist nach der Wärmebehandlung wieder durch weitere, beispielsweise spanende Bearbeitung zu entfernen, was die Produktionskosten für entsprechende Laufbahnelemente weiter in die Höhe treibt. Auch nach der spanenden Bearbeitung, also der Entfernung von Material auf der Oberfläche ist jedoch sicherzustellen, dass die maximale Härte der Oberfläche der je nach der zu erwartenden Belastung gewählten Auslegung des Großlagers entspricht, so dass die erforderliche Tragfähigkeit gegeben ist. Insofern ist die Dicke der Oberflächenschicht insbesondere bei hoch belasteten Großlagern größer zu wählen als bei kleineren Lagerdimensionen.

Deswegen weist die Oberflächenschicht eine maximale Härte auf, die geringer ist als die maximal erreichbare Härte des verwendeten Stahls. Mit dem verwendeten Stahl lässt sich grundsätzlich eine deutlich höhere Härte erzielen als mit den zum Einsatz in Großlagern bekannten Stählen, wie beispielsweise 42CrMo4. Allerdings wird dieser Vorteil nicht eingesetzt und lediglich eine Härte durch das induktive Härteverfahren (und nicht durch ein nachträgliches Anlassen) erzeugt, die der bei bekannten Wälzlagerelementen aus 42CrMo4 für Großlager entspricht. Dadurch wird der erfindungsgemäß verwendete Stahl beim Härten nicht bis an seine werkstofflichen Grenzen gebracht, wie dies oftmals beim Einsatz von 42CrMo4 der Fall ist. Dadurch ergibt sich zwar eine zu bekannten Großlagern vergleichbare maximale Härte in der Oberflächenschicht, jedoch ein anderer Härteverlauf mit zunehmender Tiefe. Während bei bekannten Stahlsorten für Großlager die Härte nach einer vergleichsweise dünnen Randschicht stark abfällt und schnell in die Härte des nicht gehärteten Bereichs übergeht, wird bei dem erfindungsgemäß verwendeten Stahl ein deutlich flacherer Übergang erzielt. Folglich reicht die gehärtete Oberflächenschicht bei geringer werdender Härte deutlich tiefer in das Laufbahnelement hinein als bei bekannten Großlagern. Gleichzeitig wird dadurch auch eine relativ feine und stabile Gefügestruktur hergestellt. Dies resultiert einerseits in einer deutlich erhöhten Lebensdauer der Großlager. Andererseits ist bei Einsatz des an sich höher härtbaren Stahls mit mehr als 0,46 Masse% an Kohlenstoff ein deutlich einfacherer und materialschonenderer Prozess zur Erreichung der erforderlichen Härte notwendig, so dass der Stahl weniger belastet wird. Dies liegt daran, dass der Stahl weniger hoch erwärmt werden muss und weniger schnell abgeschreckt wird, um den gewünschten flachen Härteverlauf zu zeigen.

Weiterhin ist nach der Erfindung zu beachten, dass die Tragfähigkeit der gehärteten Schicht und damit deren Tiefe den durch den Hertzschen Kontakt mit den Wälzlagergegenelementen erzeugten Spannungsverlauf überdeckt. Die Spannung nimmt mit zunehmender Tiefe ab. Folglich muss die Dicke der gehärteten Schicht auf die zu erwartende Belastung des Lagers abgestimmt werden, was dadurch erfolgt, dass bei höheren zu erwartenden Belastungen, also einem sich tiefer auswirkenden Spannungsverlauf dickere Randschichten erzeugt werden, als bei geringeren Belastungen.

In einer vorteilhaften Ausgestaltung der Erfindung weist der Stahl Beimischungen von Mangan, Chrom und/oder Molybdän auf. Insbesondere Beimischungen dieser Legierungselemente stellen einen Stahl bereit, der sich induktiv gut härten lässt, und eine ausreichende Härtetiefe, sowie ein geeignetes Gefüge für hohe Tragfähigkeit und lange Lebensdauer des Laufbahnelements bereitstellt. Insbesondere vorteilhaft ist es, wenn der Stahl eine Beimischung von Molybdän von mindestens 0,12 Masse% aufweist. Die vorteilhafte Härtbarkeit lässt sich ab einem Molybdän-Gehalt von 0,35 Masse% nicht mehr steigern, weshalb die Beimischung bevorzugt im Bereich von 0, 12 bis 0,35 Masse% liegt.

In einer vorteilhaften Ausgestaltung der Erfindung weist die gehärtete Oberflächenschicht eine maximale Härte von mindestens 58 HRC auf. Insbesondere ab dieser Oberflächenhärte weist das Laufbahnelement eine ausreichend stabile Laufbahn auf, um eine lange Lebensdauer zu gewährleisten.

Gemäß einem Ausführungsbeispiel der Erfindung wird eine Großwälzlageranordnung angegeben, die wenigstens ein Laufbahnelement, wie oben beschrieben aufweist und somit von den vorteilhaften Eigenschaften profitiert.

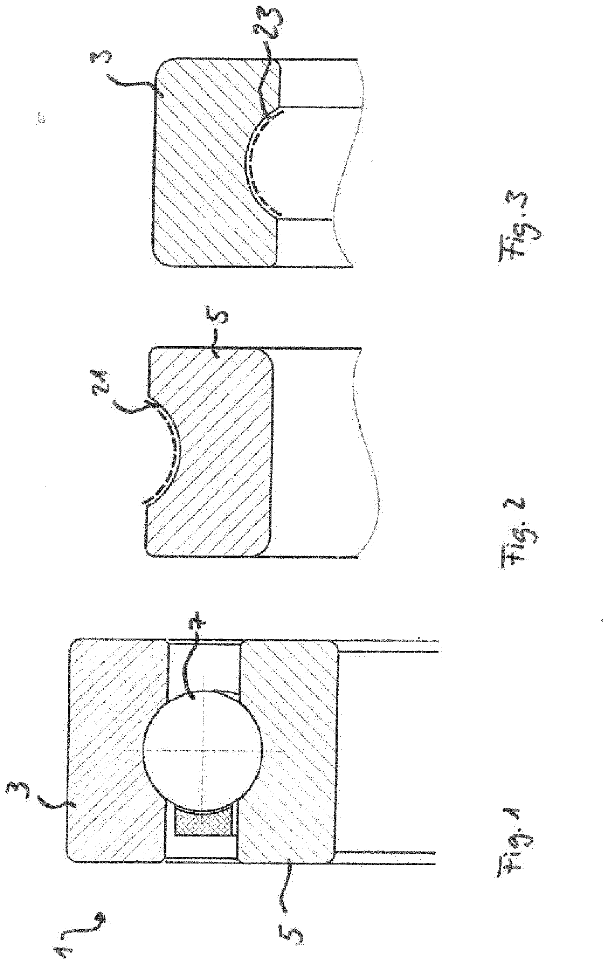

Weitere Vorteile und Ausgestaltungen der Erfindung ergeben sich aus dem nachfolgend beschriebenen Ausführungsbeispiel im Zusammenhang mit den beigefügten Figuren. Dabei zeigen die Figuren 1 bis 3 verschiedene Ansichten und Bauteile des Ausführungsbeispiels der Erfindung.

Gemäß einem Ausführungsbeispiel der Erfindung wird in der Figur 1 ein Großwälzlager 1 mit einem Durchmesser von mindestens 250 mm beschrieben. Das Großwälzlager umfasst zwei Laufbahnelemente, die als Außenring 3 und als Innenring 5 ausgeführt sind. Zwischen den Laufbahnelementen sind als Kugeln 7 ausgeführte Wälzkörper angeordnet. Bei Bewegung der zwei Laufbahnelemente kommt es zu einer abrollenden Bewegung der Kugeln 7 auf den Laufbahnelementen. Das Großwälzlager wird typischerweise in Einbausituationen angewendet, bei denen eine fortwährende umlaufende Rotation des Außenrings 3 im Vergleich zum Innenring 5 erfolgt oder umgekehrt. Dies kann beispielsweise in einer Windkraftanlage der Fall sein.

In der Figur 2 ist ausschnittsweise der Innenring 5 dargestellt. Er weist eine Laufbahn 21 auf, auf der die Kugeln 7 im Betrieb des Großwälzlagers 1 abrollen. Die Laufbahn 21 weist eine gehärtete Oberflächenschicht auf, die den Belastungen durch den Kontakt mit den Kugeln 7 widerstehen kann und eine lange Lebensdauer des Großwälzlagers gewährleistet. Gleiches gilt für den in der Figur 3 dargestellten Außenring 3, der eine ebenfalls oberflächlich gehärtete Laufbahn 23 aufweist.

Die Oberflächen der Laufbahnen 21 und 23 sind durch den abrollenden Kontakt mit den Wälzkörpern stets belastet. Die Lagerringe bestehen aus einem Stahl, der eine Beimischung von Kohlenstoff von 0,46 bis 1,0 Masse % und eine Beimischung von Molybdän von 0,12 bis 0,35 Masse% aufweist. Weitere Beimischungen sind bevorzugt Mangan zwischen 0,5 und 1,0 Masse% und/oder Chrom zwischen 0,9 und 1,5 Masse%. Entsprechende Materialien sind an sich bekannt, ihr Einsatz zur Herstellung von Laufbahnelementen mit entsprechender induktiver Härtung der Oberflächenschicht stellt im Vergleich zu bekannten Laufbahnelementen für Großwälzlager eine kostengünstigere und damit einfachere Herstellungsmethode bereit. Der Stahl kann beispielsweise der Spezifikation 50CrMo4 entsprechen, während bei bekannten Großlagern hauptsächlich 42CrMo4 eingesetzt wird.

Die Laufbahnen der Lagerringe sind nach Formgebung derselben durch ein induktives erfindungsgemäßes Verfahren gehärtet, bei dem ein Induktor nahe über die Laufbahn geführt wird, wodurch diese erwärmt wird. Es kommt zu einer Phasenumwandlung, wobei insbesondere härteres Material gebildet wird. Mittels einer nachfolgenden Brause wird das erwärmte Material abgeschreckt, so dass die härtere Struktur erhalten bleibt. Dieses induktive Härteverfahren wird nach bekannten Verfahren bevorzugt schlupflos ausgeführt, so dass keine nicht gehärtete Zone auf der Laufbahn besteht. Die Laufbahn weist entlang des ganzen Laufbahnelements somit im Rahmen fertigungstechnischer Toleranzen dieselbe Härte auf.

Die maximale Härte der Oberflächenschicht nach dem induktiven Härten und vor weiteren Behandlungsschritten, wie beispielsweise einem optionalen Anlassen, wie es in WO03/060170 beschrieben ist, beträgt mindestens 58 HRC. Diese Härte lässt sich auch bei zum Einsatz in Lagern bekannten Stahlsorten erreichen. Allerdings sind diese Stahlsorten zur Erreichung dieser Mindesthärte bis an die Grenzen ihrer werkstoffspezifischen Eigenschaften zu härten. Mit dem hier verwendeten Stahl ließe sich grundsätzlich eine deutlich höhere maximale Härte der Oberflächenschicht als 58 HRC erreichen. Diese Härte ist jedoch bei den meisten Anwendungen für Großlager nicht erforderlich. Insofern ist der Stahl zur Erreichung der Härte von 58 HRC bezüglich seiner werkstofflichen Möglichkeiten deutlich weniger ausgereizt als zu diesem Einsatzzweck bekannten Stahlsorten. Insofern ist zur Erreichung der gewünschten maximalen Härte ein im Vergleich zu bekannten angewendeten Herstellungsverfahren für Bauteile von Großlagern ein deutlich materialschonenderes Verfahren der Härtung möglich. So ist die maximale Temperatur beim Härten geringer und auch das Abschrecken kann mit geringeren Temperaturgradienten erfolgen, wodurch zudem ein flacherer Übergang der Härte zwischen der Oberflächenschicht und dem Grundgefüge entsteht. Der materialschonende Prozess führt insbesondere zu einer besseren Reproduzierbarkeit der Ergebnisse.

Das induktive Härtungsverfahren ist derart ausgeführt, dass die Tiefe der gehärteten Schicht den Anforderungen an die Lebensdauer des Lagers entspricht. Insbesondere ist die Tiefe der gehärteten Schicht derart gewählt, dass ein durch den Hertzschen Kontakt mit den Wälzkörpern erzeugter Spannungsverlauf überdeckt wird. Die gehärtete Schicht reicht also tiefer in das Material als die durch den Wälzkontakt erzeugte Spannung die Belastbarkeit des nicht gehärteten Grundmaterials übersteigt. Daher sind Überbelastungen des Grundmaterials ausgeschlossen, die erhöhte Spannung und Belastung wird durch Oberflächenschicht aufgenommen. Daraus resultiert eine hohe Lebensdauer des Großlagers. Zudem weist die Oberflächenschicht ein geeignetes Gefüge für eine hohe Tragfähigkeit des Lagers auf.

In einem weiteren Ausführungsbeispiel der Erfindung sind neben den Laufbahnelementen auch die Wälzkörper gemäß der Erfindung ausgeführt, sind also mittels eines induktiven Verfahrens gehärtet und bestehen aus einem entsprechenden Stahl. Die Erfindung lässt sich folglich bei allem durch den Wälzkontakt belasteten Bestandteilen eines Wälzlagers vorteilhaft einsetzen. Zudem ist die Erfindung nicht auf Wälzlager mit Kugeln als Wälzkörper beschränkt, sondern grundsätzlich auf alle Typen von Großwälzlagern anwendbar.

### Bezugszeichenliste

- 1: Großwälzlager
- 3: Außenring
- 5: Innenring
- 7: Kugel
- 21,23: Laufbahn

## Patentansprüche

1. Laufbahnelement (3, 5, 7) für ein Großwälzlager aufweisend folgende Merkmale:
- wenigstens eine Laufbahn (21, 23) in Kontakt zu einem Wälzkörper (3, 5, 7),
- die Laufbahn (3, 5, 7) weist ein Grundgefüge und eine induktiv gehärtete Oberflächenschicht auf, wobei die induktiv gehärtete Oberflächenschicht mittels eines induktiven Härteverfahrens, das ein Erwärmen mit einem Induktor und ein nachfolgendes Abschrecken mit einer Brause umfasst, gehärtet ist,
- das Laufbahnelement (21, 23) besteht aus einem Stahl, der eine Beimischung von Kohlenstoff von mindestens 0,46 Masse% aufweist,
**dadurch gekennzeichnet, dass**
- eine Tiefe der induktiv gehärteten Oberflächenschicht auf einen von einem Hertzschen Kontakt mit dem Wälzkörper erzeugten Spannungsverlauf abgestimmt ist, und diesen überdeckt; und
- die Oberflächenschicht (21, 23) nach dem Abschrecken eine durch das induktive Härten erzeugte maximale Härte aufweist, die geringer als die maximal erreichbare Härte des verwendeten Stahls ist, wobei die Oberflächenschicht der Laufbahn entlang des ganzen Laufbahnelements im Rahmen fertigungstechnischer Toleranzen die gleiche Härte aufweist.

2. Laufbahnelement nach Anspruch 1, wobei die gehärtete Oberflächenschicht (21, 23) eine maximale Härte von mindestens 58 HRC aufweist.

3. Laufbahnelement nach Anspruch 1 oder 2, wobei der Stahl eine Beimischung von Mangan, Chrom und/oder Molybdän aufweist.

4. Laufbahnelement nach Anspruch 3, wobei die Beimischung von Molybdän mindestens 0,12 Masse% beträgt.

5. Laufbahnelement nach einem der vorherigen Ansprüche, wobei das Wälzlagerelement zum Einsatz in einem Großwälzlager mit einem Außendurchmesser von mindestens 250 mm ausgebildet ist.

6. Großwälzlageranordnung mit wenigstens einem Laufbahnelement (3, 5, 7) nach einem der Ansprüche 1 bis 5.

7. Verfahren zur Herstellung eines Laufbahnelement (3, 5, 7) für ein Großwälzlager mit folgenden Merkmalen:
- Auswahl eines Stahls, der eine Beimischung von Kohlenstoff von mindestens 0,46 Masse% aufweist;
- Bereitstellen einer Laufbahn für einen Kontakt mit einem Wälzkörper;
- Abstimmen einer Dicke einer zu härtenden Oberflächenschicht der Laufbahn auf eine zu erwartende Belastung des Lagers, basierend auf einem durch einen Hertzschen Kontakt erzeugten Spannungsverlauf;
- Induktives Härten der Oberflächenschicht der Laufbahn, wobei die Kontaktzone mit einem Induktor erwärmt und nachfolgend mit einer Brause abgeschreckt wird, wobei eine maximale Temperatur beim Härten geringer und das Abschrecken mit einem geringeren Temperaturgradienten erfolgt als für den verwendeten Stahl üblich,
sodass die Oberflächenschicht (21, 23) nach dem Abschrecken eine durch das induktive Härten erzeugte maximale Härte aufweist, die geringer als die maximal erreichbare Härte des verwendeten Stahls ist, wobei die Oberflächenschicht der Laufbahn entlang des ganzen Laufbahnelements im Rahmen fertigungstechnischer Toleranzen die gleiche Härte aufweist, und dass die Tiefe der Oberflächenschicht den durch den Hertzschen Kontakt erzeugten Spannungsverlauf überdeckt.

## Claims

1. Raceway element (3, 5, 7) for a large roller bearing, having the following features:
- at least one raceway (21, 23) in contact with a rolling element (3, 5, 7),
- the raceway (3, 5, 7) has a basic structure and an inductively hardened surface layer, the inductively hardened surface layer being hardened by means of an inductive hardening process which comprises heating with an inductor and subsequent quenching with a sprinkler,
- the raceway element (21, 23) consists of a steel which has an addition of carbon of at least 0.46% by mass,
**characterized in that**
- a depth of the inductively hardened surface layer is adapted to a voltage profile generated by Hertzian contact with the rolling element, which it covers; and
- the surface layer (21, 23), after the quenching, has a maximum hardness, generated by the inductive hardening, which is lower than the maximum achievable hardness of the steel used, the surface layer of the raceway having the same hardness, within manufacturing tolerances, along the entire raceway element.

2. Raceway element according to Claim 1, wherein the hardened surface layer (21, 23) has a maximum hardness of at least 58 HRC.

3. Raceway element according to Claim 1 or 2, wherein the steel has an addition of manganese, chromium and/or molybdenum.

4. Raceway element according to Claim 3, wherein the addition of molybdenum is at least 0.12% by mass.

5. Raceway element according to any of the preceding claims, wherein the roller bearing element is configured for use in a large roller bearing having an outer diameter of at least 250 mm.

6. Large roller bearing arrangement having at least one raceway element (3, 5, 7) according to any of Claims 1 to 5.

7. Method for producing a raceway element (3, 5, 7) for a large roller bearing, having the following features:
- selection of a steel which has an addition of carbon of at least 0.46% by mass;
- provision of a raceway for contact with a rolling element;
- adaptation of a thickness of a raceway surface layer for hardening to an anticipated load on the bearing, based on a voltage profile generated by Hertzian contact;
- inductive hardening of the surface layer of the raceway, the contact zone being heated with an inductor and subsequently quenched with a sprinkler, where a maximum temperature during hardening is lower and the quenching takes place with a lower temperature gradient than customary for the steel used,
so that the surface layer (21, 23), after quenching, has a maximum hardness, generated by the inductive hardening, which is lower than the maximum achievable hardness of the steel used, the surface layer of the raceway having the same hardness, within manufacturing tolerances, along the entire raceway element, and the depth of the surface layer covers the voltage profile generated by the Hertzian contact.

## Revendications

1. Élément de piste de roulement (3, 5, 7) pour un palier à roulement large, présentant les caractéristiques suivantes :
- au moins une piste de roulement (21, 23) en contact avec un corps de roulement (3, 5, 7),
- la piste de roulement (3, 5, 7) présente une structure de base et une couche de surface durcie par induction, la couche de surface durcie par induction étant durcie au moyen d'un procédé de durcissement par induction, qui comprend un chauffage avec un inducteur et une trempe ultérieure avec une douche,
- l'élément de piste de roulement (21, 23) est constitué d'un acier qui présente un ajout de carbone d'au moins 0,46 % en masse,
**caractérisé en ce que**
- une profondeur de la couche de surface durcie par induction est accordée à un profil de contrainte produit par un contact de Hertz avec le corps de roulement, et recouvre celui-ci ; et
- la couche de surface (21, 23) présente, après la trempe, une dureté maximale produite par le durcissement par induction, qui est inférieure à la dureté maximale réalisable de l'acier utilisé, la couche de surface de la piste de roulement présentant la même dureté le long de l'ensemble de l'élément de piste de roulement dans le cadre de tolérances techniques de fabrication.

2. Élément de piste de roulement selon la revendication 1, dans lequel la couche de surface durcie (21, 23) présente une dureté maximale d'au moins 58 HRC.

3. Élément de piste de roulement selon la revendication 1 ou 2, dans lequel l'acier présente un ajout de manganèse, de chrome et/ou de molybdène.

4. Élément de piste de roulement selon la revendication 3, dans lequel l'ajout de molybdène vaut au moins 0,12 % en masse.

5. Élément de piste de roulement selon l'une quelconque des revendications précédentes, dans lequel l'élément de palier de roulement est configuré pour être utilisé dans un palier de roulement large avec un diamètre extérieur d'au moins 250 mm.

6. Agencement de palier de roulement large avec au moins un élément de piste de roulement (3, 5, 7) selon l'une quelconque des revendications 1 à 5.

7. Procédé de fabrication d'un élément de piste de roulement (3, 5, 7) pour un palier de roulement large avec les caractéristiques suivantes :
- choix d'un acier qui présente un ajout de carbone d'au moins 0,46 % en masse ;
- fourniture d'une piste de roulement destinée à entrer en contact avec un corps de roulement ;
- accordement d'une épaisseur d'une couche de surface à durcir de la piste de roulement à une charge attendue du palier, sur la base d'un profil de contrainte produit par un contact de Hertz ;
- durcissement par induction de la couche de surface de la piste de roulement, la zone de contact étant chauffée avec un inducteur et ensuite trempée avec une douche, une température maximale lors du durcissement étant inférieure à celle habituelle et la trempe étant effectuée avec un gradient de température inférieur à celui habituel pour l'acier utilisé,
de telle sorte que la couche de surface (21, 23) présente, après la trempe, une dureté maximale produite par le durcissement par induction, qui est inférieure à la dureté maximale réalisable de l'acier utilisé, la couche de surface de la piste de roulement présentant la même dureté le long de l'ensemble de l'élément de piste de roulement dans le cadre de tolérances techniques de fabrication, et
de telle sorte que la profondeur de la couche de surface recouvre le profil de contrainte produit par le contact de Hertz.
